# EUROPÄISCHE PATENTANMELDUNG

(11) **EP 1 180 661 A2**
(43) Veröffentlichungstag der Anmeldung: **20.02.2002**
(21) Anmeldenummer: 01119197.0
(22) Anmeldetag: 09.08.2001
(51) Int. Cl.: G01B 21/02

(54) **Gerät zur Schlauchlängenmessung**

(30) Priorität: 19.08.2000 DE 20014374 U
(71) Anmelder: MesSen Nord Gesellschaft für Mess-, Sensor- und Datentechnik mbH, 18198 Stäbelow (DE)
(72) Erfinder: Machka, Steffen, 18190 Sanitz (DE)
(74) Vertreter: Schnick, Achim

(57) **Zusammenfassung**

Die Erfindung betrifft ein Gerät zur berührungslosen Schlauchlängenmessung, insbesondere zur Messung von Spülstrecken bei der Kanalreinigung. Die Aufgabe der Erfindung besteht darin, ein Gerät zur Schlauchlängenmessung bereitzustellen, das eine schlupflose Messung von Spülstrecken relativ zu einer einstellbaren Startposition sowie von Tageswegstrecken als Summe der vorwärts gespülten Arbeitsgänge ermöglicht.

Das Gerät zur Schlauchlängenmessung bestehend aus einer Schlauchtrommel zur Aufnahme eines Hochdruckschlauches in mehreren übereinander liegenden Schlauchwicklungen, einem an der Schlauchtrommel, mit dieser gemeinsam umlaufend angeordneten Geber, einem ortsfest angeordneten berührungslosen, impulsgebenden Sensor, wobei der Sensor mit dem Geber einmal pro Schlauchtrommelumdrehung in Wirkverbindung steht, einem geräteinternen Mikrorechner zur Verarbeitung der bei der Umdrehung der Schlauchtrommel vom Sensor gelieferten Impulse und mit dem Mikrorechner verbundene Anzeige- und Bedienmodule.

## Beschreibung

Die Erfindung betrifft ein Gerät zur berührungslosen Schlauchlängenmessung, insbesondere zur Messung von Spülstrecken bei der Kanalreinigung.

Es sind elektronische Meßgeräte zur Wegstreckenmessung für Hochdruckschläuche bekannt, bei denen der von der Schlauchtrommel ablaufende Hochdruckschlauch mit einer Andruckrolle derart in Wirkverbindung steht, daß die Andruckrolle durch den ablaufenden Schlauch in Drehung versetzt wird. Diese Drehungen werden von einem, mit der Andruckrolle verbundenen Meßwertgeber als abgewickelte Schlauchlänge erfaßt und an ein Meßgerät zur Auswertung übergeben.

Der Nachteil dieses Meßgerätes besteht darin, daß der auf der zwischen Schlauch und Andruckrolle als Rollreibung wirkende Kontakt infolge eines nicht zu vermeidenden Schlupfes zu einer fehlerhaften Meßwerterfassung führt und damit die gemessenen Tageswegstrecken zum Beispiel eines Spülkopfes nicht mit den tatsächlich abgearbeiteten Tageswegstrecken übereinstimmen. Bedingt durch die vorherrschenden Arbeitsbedingungen bei der Kanalreinigung ist während der Ausführung der Reinigungsarbeiten mit einer Befeuchtung und Verschmutzung des Hochdruckschlauches zu rechnen, was den auftretenden Schlupf zwischen Schlauch und Andruckrolle weiter vergrößert.

Diese Fehler verhindern zum einen eine präzise Einhaltung von Haltungsstrecken und damit eine genaue Positionierung des Spülkopfes innerhalb des zu reinigenden Kanals und zum anderen eine korrekte Abrechnung der erbrachten Reinigungsleistungen, sofern diese auf der Grundlage zurückgelegter Spülstrecken erfolgt.

Die Aufgabe der Erfindung besteht darin, ein Gerät zur Schlauchlängenmessung bereitzustellen, das eine schlupflose Messung von Spülstrecken relativ zu einer einstellbaren Startposition sowie von Tageswegstrecken als Summe der vorwärts gespülten Arbeitsgänge ermöglicht.

Erfindungsgemäß wird die Aufgabe durch die Merkmale des Anspruches 1 gelöst.

Die Erfindung soll anhand eines Ausführungsbeispiels näher erläutert werden. In diesem Beispiel stellt sich das Gerät zur Schlauchlängenmessung als Bestandteil eines Hochduckspülfahrzeuges dar, das zur Reinigung von Kanalrohren eingesetzt wird.

Eine wichtige Bezugsgröße für die Bestimmung der örtlichen Position des Spülkopfes im Kanalrohr, also der vorgegebenen Haltungsstrecken ist die Erfassung der durch den Spülkopf zurückgelegten Wegstrecke, die über die Messung der abgewickelten Schlauchlänge erfolgt.

Gleichfalls wird die täglich zurückgelegte Wegstrecke des Spülkopfes der Abrechnung der Reinigungsleistungen zugrunde gelegt.

Es ist also ersichtlich, daß eine weitgehend genaue Erfassung der Wegstrecke über die Messung und Summierung der ausgelegten Schlauchlänge erforderlich ist.

Das erfindungsgemäße Meßgerät sieht eine indirekte und damit eine schlupflose Messung der Schlauchlänge vor. Dazu ist die durch Bordscheiben seitlich begrenzte Schlauchtrommel auf der einen Seite mit einem Geber versehen, der vorzugsweise an der Außenseite einer der Bordscheiben befestigt ist.

Dieser Geber folgt somit synchron der Drehbewegung der Schlauchtrommel beim Abwickeln oder beim Aufwickeln des Schlauches.

Dem Geber ist ein Sensor ortsfest so zugeordnet, daß sich bei der Drehbewegung der Schlauchtrommel der Geber bei jeder Umdrehung einmal in eine mit dem Sensor gegenüberliegende Position bewegt. Dabei wird im Sensor ein Impuls ausgelöst, der einem im Mikrorechner installierten Rechenmodell zur weiteren Verarbeitung zugeführt wird. Jedem Impuls wird durch das Rechenmodell eine abgewickelte Schlauchlänge zugewiesen, die im Anzeigemodul angezeigt wird.

Da nur die abgewickelten Einzellängen erfaßt und durch das Rechenmodell verarbeitet werden sollen, ist eine Erkennung der Drehrichtung der Schlauchtrommel notwendig. Dieses wird durch einen Geber mit paarweise angeordneten Geberelementen erreicht. Beim Drehen der Schlauchtrommel geraten die Geberelemente nacheinander in den Wirkbereich des Sensors. Aus der Reihenfolge des Eintritts der Geberelemente in den Wirkbereich des Sensors wird durch den Mikrorechner die Drehrichtung der Schlauchtrommel bestimmt, also ob der Schlauch ab- oder aufgewickelt wird.

Um die Zuordnung der Schlauchlänge zur Schlauchaufwicklung auf der Schlauchtrommel zu ermitteln und im Mikrorechner zu speichern, ist eine Grundkalibrierung des Meßgerätes voranzustellen. Dabei wird nach der Auswahl eines Schlauchdurchmessers oder einem Wechsel auf einen Schlauch mit einem anderen Durchmesser durch komplettes Ab- und anschließendem Aufwickeln des Schlauches eine Referenzmessung durchgeführt, d.h. nach jeder vollzogenen Umdrehung der Schlauchtrommel erfaßt der Sensor einen Impuls von den Gebern, wobei der erste Impuls die gesamte abgewickelte Schlauchlänge und der letzte Impuls die gesamte aufgewickelte Schlauchlänge definiert. Auf der Grundlage dieser einmalig durchgeführten Kalibrierung ist der im Gerät verwendete Mikrorechner mit Hilfe des Rechenmodells in der Lage, die auf- oder abgewickelte Schlauchlänge aus der Bewegung der Schlauchtrommel zu bestimmen.

Zur Ermittlung der Tageswegstrecken werden im Mikrorechner die abgewickelten Einzellängen durch einen Tagesmeterzähler summiert und abgespeichert

Mittels der Bedienmodule ist der Mikrorechner durch die Bedienungsperson auf bestimmte Schlauchlängen oder die Nullstellung einstellbar.

Durch die Anordnung einer Vielzahl von Gebern auf einem Teilkreis der Schlauchtrommel wird die Impulsdichte erhöht und damit eine genauere Schlauchlängenmessung ermöglicht.

## Patentansprüche

1. Gerät zur Schlauchlängenmessung bestehend aus
- einer Schlauchtrommel zur Aufnahme eines Hochdruckschlauches in mehreren übereinander liegenden Schlauchwicklungen,
- einem an der Schlauchtrommel, mit dieser gemeinsam umlaufend angeordneten Geber,
- einem ortsfest angeordneten berührungslosen, impulsgebenden Sensor, wobei der Sensor mit dem Geber einmal pro Schlauchtrommelumdrehung in Wirkverbindung steht,
- einem geräteinternen Mikrorechner zur Verarbeitung der bei der Umdrehung der Schlauchtrommel vom Sensor gelieferten Impulse,
- mit dem Mikrorechner verbundene Anzeige- und Bedienmodule.

2. Gerät zur Schlauchlängenmessung nach Anspruch 1, **dadurch gekennzeichnet, daß** der Geber paarweise Geberelemente aufweist, die nacheinander in den Wirkbereich des Sensors eintretbar sind.

3. Gerät zur Schlauchlängenmessung nach Anspruch 1, **dadurch gekennzeichnet, daß** der Mikrorechner mit einem Rechenmodell ausgestattet ist, über das jede durch den Sensor signalisierte Drehposition der Schlauchtrommel als abgewickelte Schlauchlänge definierbar ist.

4. Gerät zur Schlauchlängenmessung nach Anspruch 3, **dadurch gekennzeichnet, daß** der Mikrorechner einen Zähler für die Summierung aller arbeitstäglich abgewickelten Schlaucheinzellängen aufweist.

5. Gerät zur Schlauchlängenmessung nach Anspruch 1 und 2, **dadurch gekennzeichnet, daß** an der Schlauchtrommel, eine Vielzahl von, auf einem Teilkreis gleichmäßig verteilten Gebern angeordnet ist.
